# EUROPEAN PATENT SPECIFICATION

(11) **EP 2 450 278 B1**
(45) Date of publication and mention of the grant of the patent: **25.05.2016**
(21) Application number: 10171070.5
(22) Date of filing: 28.07.2010
(51) Int. Cl.: B64D 37/30, B64D 37/12

(54) **Hydrogen tank for H2-injection**
Wasserstofftank zur H2-Injektion
Réservoir d'hydrogène pour injection de H2

(43) Date of publication of application: 09.05.2012
(73) Proprietor: Airbus Operations GmbH, 21129 Hamburg (DE)
(72) Inventor: Dalle Donne, Claudio, 81827 München (DE); Steinwandel, Jürgen, 88690 Uhldingen (DE); Price, John, Almondsbury, Bristol BS32 4HG (GB)
(74) Representative: Uexküll & Stolberg

(56) References cited:
- DE-C1- 19 543 163
- US-A- 3 057 588
- US-A1- 2008 230 654
- SILVERSTEIN & HALL: "Liquid hydrogen as a jet fuel for high-altitude aircraft.", NACA RESEARCH MEMORANDUM, 5 June 1962 (1962-06-05), - 5 June 1962 (1962-06-05), XP002612711, Cleveland, Ohio, USA
- Westenberger Andreas: "Cryoplane- Hydrogen aircraft", H2 Expo Hamburg, 11.10.03 , 11 October 2003 (2003-10-11), XP002612712, Hamburg Retrieved from the Internet: URL:http://www.h2hh.de/downloads/Westenber ger.pdf [retrieved on 2010-12-04]
- "TUPOLEV CARRIES ON WITH CRYOGENIC FUEL RESEARCH", FLIGHT INTERNATIONAL, REED BUSINESS INFORMATION, SUTTON SURREY, GB, vol. 154, no. 4652, 18 November 1998 (1998-11-18), page 31, XP000782421, ISSN: 0015-3710

## Description

### Field of the invention

The invention relates to the field of aircrafts. In particular, the invention relates to a hydrogen tank for an aircraft, an aircraft, a hydrogen supply system, a method for supplying hydrogen to an aircraft and a use of a hydrogen tank with an aircraft.

### Background of the invention

Most aircrafts use gas turbine engines. A gas turbine engine may include a core having a compressor fixedly joined to a turbine by a core rotor extending axially there between. At least one combustor chamber, for example an annular combustor or a plurality of combustor chambers distributed around the core, may be disposed between the compressor and the turbine and may include fuel injectors. As a rule, conventional gas turbine engines are supplied with hydrocarbon fuel like kerosene.

Generally, gas turbines may emit undesirable compounds such as nitrous oxide components (NOx) and carbon-containing compounds. It may be desirable to decrease various emissions as much as possible so that selected compounds may not enter the atmosphere. In particular, it may be desirable to reduce NOx emissions to a substantially low level.

Injecting hydrogen into a combustion chamber of an engine of an aircraft helps to reduce the exhaust gas emissions of the combustion chamber. Besides reducing emissions, for example CO2, NOx, CO, HC, the hydrogen combustion enhances the thrust of the engine. This allows for reducing the size of the combustion chamber and an optimization of the design of the combustion chamber and the engine to enhance cruise conditions.

For example, hydrogen may be supplied from an on-board fuel cell which may be supplied with hydrocarbon fuel, for example kerosene, that is also used for supplying the engine of the aircraft. Further, the hydrogen from the fuel cell may be buffered in an on-board hydrogen tank.

However, this design may increase the weight of the aircraft, since the on-board fuel cell and the on-board hydrogen tank as well as the tubing interconnecting the hydrogen tank and the engine contribute additional weight to the aircraft.

For example, the fuel cell and the hydrogen tank may be situated in the fuselage of the aircraft and may be interconnected with the engine by the tubing that transports the hydrogen to the engine of the aircraft that may be situated under the wing or near the aft of the aircraft.

This may cause safety issues in view of hydrogen generated and stored within the aircraft. For example, authorities may not accept highly explosive hydrogen on-board of a passenger aircraft.

The NACA research memorandum "Liquid hydrogen as a jet fuel for high-altitude aircraft" from Silverstein & Hall relates to the use of hydrogen as jet fuel for military aircrafts. It mentions that hydrogen may be stored in drop tanks and discloses an aircraft according to the preamble of claim 1.

### Summary of the invention

This objective is achieved by the subject-matter of the independent claims. Further exemplary embodiments are evident from the dependent claims.

A first aspect of the invention relates to a hydrogen tank for an aircraft.

According to an embodiment of the invention, the hydrogen tank is an external hydrogen tank. In other words, the hydrogen tank is adapted to be attached to an outside of the aircraft, for example it may be outside of the hull of the aircraft.

In contrast to an external hydrogen tank, an internal hydrogen tank is situated within the aircraft. For example, an internal hydrogen tank may be attached to the fuselage of the aircraft inside of the aircraft and an external hydrogen tank may be attached to the fuselage of the aircraft outside of the aircraft.

Further, an external hydrogen tank may be adapted to be exposed to the environment of the aircraft. For example, the hydrogen tank may be designed not to corrode outside of the aircraft, if it is exposed to mist and rain. Further, the external hydrogen tank may be streamlined and may have low resistance against the flow of air, for example, when the aircraft is cruising. For example, the hydrogen tank may be a robust metallic tank.

Further, the external hydrogen tank may be mechanical attached to the fuselage of the aircraft. In particular, the hydrogen tank may be adapted to be attached to a wing or a tail of the aircraft, for example the wing struts or the aft fuselage.

For example, the hydrogen tank may be connected to the aircraft very close to one of the engines. In this way, the length of the tubing or fuel lines between the tank and the engine may be very short.

According to an embodiment of the invention, the hydrogen tank is adapted for providing hydrogen to an engine of the aircraft. For example, the hydrogen tank may have an opening that may be connected with a tubing of the aircraft that is connected with an engine of the aircraft.

In other words, to save weight und to enhance safety, the hydrogen tank for supplying an engine with hydrogen is attached externally to the aircraft.

According to an embodiment of the invention, the hydrogen tank comprises a tank connection element for releasably coupling the hydrogen tank to the aircraft. On the one hand, the hydrogen tank may be adapted to be mechanically connected to the outside of the aircraft. On the other hand, the hydrogen tank may be adapted to be connected with a tubing or with pipes or fuel lines of the aircraft for supplying hydrogen to an engine of the aircraft.

It has to be understood, that a releaseable coupled hydrogen tank may be easily decoupled from the aircraft and coupled with the aircraft. For example, the attachment system of the hydrogen tank to the aircraft may be similar to that of external tanks of fighter aircrafts. In this way, the hydrogen tank may be connected and disconnected from the aircraft without opening or closing screws. A tank connection element may be adapted to be engaged with an aircraft connection element. For example, the tank connection element and the aircraft connection element form together a plug mechanism or a lock mechanism that easily may be opened or closed, for example by an actuator that, for example, may be activated by the pilot.

According to an embodiment of the invention, the hydrogen tank is adapted to be dropped from the aircraft, in particular, when the aircraft is flying. For example, the hydrogen tank may comprise a security valve that closes the opening of the hydrogen tank, when the hydrogen tank is disconnected from the aircraft. This may assure that no hydrogen left in the hydrogen tank may leave the hydrogen tank in the vicinity of an engine of the aircraft.

The hydrogen tank may be adapted for being reused after drop-off.

Further, the hydrogen tank may comprise an outer hull that is adapted for receiving impact forces that are generated, when the hydrogen tank drops to the ground, for example when the hydrogen tank is dropped from the aircraft from an altitude up to 50 m, up to 100 m or up to 150 m.

Alternatively or additionally, the hydrogen tank may comprise a parachute that is adapted to open after the release of the tank from the aircraft. Due to the parachute, the hydrogen tank may float to the ground without big impact forces.

A further aspect of the invention relates to an aircraft.

According to an embodiment of the invention, the aircraft comprises an aircraft connection element for attaching a hydrogen tank as described in the above and the following to the aircraft. For example, the aircraft connection element may be situated on an outer surface of the aircraft and/or may be connected with the fuselage of the aircraft for mechanically supporting the hydrogen tank. The aircraft connection element may be adapted to engage a tank connection element of the hydrogen tank.

For example, there may be differently designed hydrogen tanks and aircrafts each of which comprise the same tank connection element and aircraft connection element, respectively. In this way, different hydrogen tanks may be used for different aircrafts, for example dependent on the situation. For example, when the aircraft is starting from an airport with a relative short runway, much hydrogen may be injected into the engine of the aircraft and a big hydrogen tank that is adapted to store a big amount of hydrogen may be used. Further, a hydrogen tank used for a first aircraft may be used with a second aircraft after being refilled.

According to an embodiment of the invention, the aircraft connection element comprises a mechanical connection for supporting the hydrogen tank and/or a fuel connection for connecting the hydrogen tank to a tubing or a hydrogen line of the aircraft connected with the engine of the aircraft. This may have the advantage, that with only one working step, both connections may be connected.

According to an embodiment of the invention, the aircraft connection element comprises an actuator element for disconnecting the hydrogen tank from the aircraft. The actuator element may be controlled by a controller of the aircraft. For example, the controller may be activated by the pilot of the aircraft, for example with a switch in the cockpit. Alternatively or additionally, the controller may be activated from an external source like the tower of an airport. For example, when the pilot or the personnel of the tower sees that the aircraft has reached the altitude at which the hydrogen tank should be dropped, the pilot or the personnel may activate the controller and the hydrogen tank is disconnected from the aircraft and will be dropped to the ground. It may also be possible that the dropping of the hydrogen tank is triggered automatically, when air airplane reaches a predefined altitude or when the airplanes passes over a dropping area.

For example, such an actuator element may be a lock mechanism with a bar that is moved by a motor or by the magnetic forces of a solenoid.

According to an embodiment of the invention, the aircraft comprises an engine which is adapted to be supplied with hydrogen from the hydrogen tank. In a normal cruise mode, the engine may be adapted to be supplied with hydrocarbon fuel like kerosene. For enhancing the power of the engine and for reducing unwanted substances in the exhaust, which may cause pollution of the environment, the engine may be additionally supplied with hydrogen from the hydrogen tank. To this end, the engine may comprise hydrogen injectors that are adapted to inject hydrogen into the combustion chamber of the engine.

According to an embodiment of the invention, the aircraft is a passenger aircraft. In particular for passenger aircrafts the safety is enhanced for the passengers, if during the normal cruise and the landing no large amounts of hydrogen are on board of the aircraft.

According to an embodiment of the invention, the aircraft may be an airplane or a helicopter. In particular big airplanes, for example passenger airplanes for more than 50 passengers, and helicopters normally have an engine on the basis of a gas turbine.

A further aspect of the invention is a hydrogen supply system.

According to an embodiment of the invention, the hydrogen supply system comprises a plurality of hydrogen tanks as described in the above and the following, at least one aircraft as described in the above and in the following and a refilling station for refilling hydrogen tanks.

For example, the hydrogen tanks may be re-usable or disposable tanks. In the filling or refilling station, the hydrogen tanks are filled with liquid hydrogen and transported to the aircraft. after that, at least one filled hydrogen tank is fixed or attached to the aircraft, for example to the wing or the aft fuselage. During taxiing, i.e. the movement of the aircraft on the ground, and in the initial takeoff phase, H2 or hydrogen is injected into the engine of the aircraft, for example into the combustion chamber of the engine. In particular during taxiing and takeoff, the hydrogen injection into the engine will cause a hydrogen combustion inside the engine which enhances the trust of the engine at taxiing and takeoff. Additionally, when hydrogen is injected in a low power mode of the aircraft, for example during taxiing at an airport, the unwanted emissions of the engines may be reduced.

When the aircraft reaches the end of the runway or after the start of the aircraft the hydrogen tanks may be empty or may only contain only a small amount of hydrogen and may be dropped to the ground, for example they may be released by the pilot or an autonomous external trigger.

According to an embodiment of the invention, the hydrogen supply system comprises a dropping area for receiving one of the hydrogen tanks dropped from the aircraft, for example, at the end of the runway there may be a specific area with a soft underground, for example a sandpit. It may be possible, that the at least one hydrogen tank or all of the hydrogen tanks of an aircraft are released from the aircraft, such that they all fall into the dropping area of the hydrogen supply system. After being dropped, the hydrogen tanks may be collected from the dropping area to be disposed or transported to the refilling station to be refilled.

A further aspect of the invention relates to a method for supplying hydrogen to an aircraft.

According to an embodiment of the invention, the method comprises the step of: attaching a hydrogen tank to an outside of the aircraft. During the attaching, the hydrogen tank may be mechanically connected to the aircraft and/or may be connected with an engine of the aircraft, such that hydrogen from the hydrogen tank may be injected into the engine.

According to an embodiment of the invention, the method comprises the step of: injecting hydrogen into an engine of the aircraft. In particular, the injection may take place during taxiing of the aircraft and during takeoff of the aircraft, in particular during the initial phase of takeoff.

According to an embodiment of the invention, the method comprises the step of: releasing the hydrogen tank from the aircraft. For example, the releasing may be triggered internally with respect to the aircraft, for example by a pilot of the aircraft or by a controller of the aircraft. Alternatively or additionally, the releasing may also be triggered externally with respect to the aircraft, for example by a radio signal, e.g. by a signal from the tower of an airport.

According to an embodiment of the invention, the method comprises the step of: collecting the hydrogen tank in a dropping area. For example, the hydrogen tank may be released at the end of the runway the aircraft is lifting off, such that the hydrogen tank drops or falls into the dropping area.

According to an embodiment of the invention, the method comprises the step of: refilling the hydrogen tank in a refilling station. For example, the hydrogen tank may be a re-usable tank. On the other end, it is possible that the hydrogen tank is disposable and is discarded after the collection in the dropping area.

According to an embodiment of the invention, the method comprises the step of: attaching the hydrogen tank to a further aircraft. After the refilling of the hydrogen tank, the hydrogen tank may be transported to a further aircraft, that may not be the same aircraft the hydrogen tank has been dropped from and may be attached to this further aircraft.

A further aspect of the invention relates to a use of an external hydrogen tank with an aircraft.

To summarize, the advantages of an external hydrogen tank of an aircraft may be: Firstly, H2 or hydrogen may be injected when it is most efficient, for example during taxiing and takeoff. Secondly, no hydrogen may be on-board during flight, i.e. there may be lower safety concerns of authorities. Thirdly, the hydrogen tanks may be attached very close to the engines of the aircraft, for example jet engines. This may result in lower additional weight caused by the hydrogen supply facilities of the aircraft.

These and other aspects of the invention will be apparent from and elucidated with reference to the embodiments described hereinafter.

### Brief description of the drawings

Below, embodiments of the present invention are described in more detail with reference to the attached drawings.
Fig. 1 shows a schematic cross-sectional view of an aircraft according to an exemplary embodiment of the invention.
Fig. 2 shows fuel supply facilities of an aircraft according to an exemplary embodiment of the invention.
Fig. 3a, 3b and 3c show views from different directions of an aircraft according to an exemplary embodiment of the invention.
Figs. 4a and 4b show different views of an aircraft according to an exemplary embodiment of the invention.
Fig. 5 schematically shows a hydrogen supply system according to an exemplary embodiment of the invention and method steps for supplying hydrogen to an aircraft according to an exemplary embodiment of the invention.

The reference symbols used in the drawings, and their meanings, are listed in summary form in the list of reference symbols. In principle, identical parts are provided with the same reference symbols in the figures. It should be noted that the figures are schematically and not to scale.

### Detailed description of embodiments

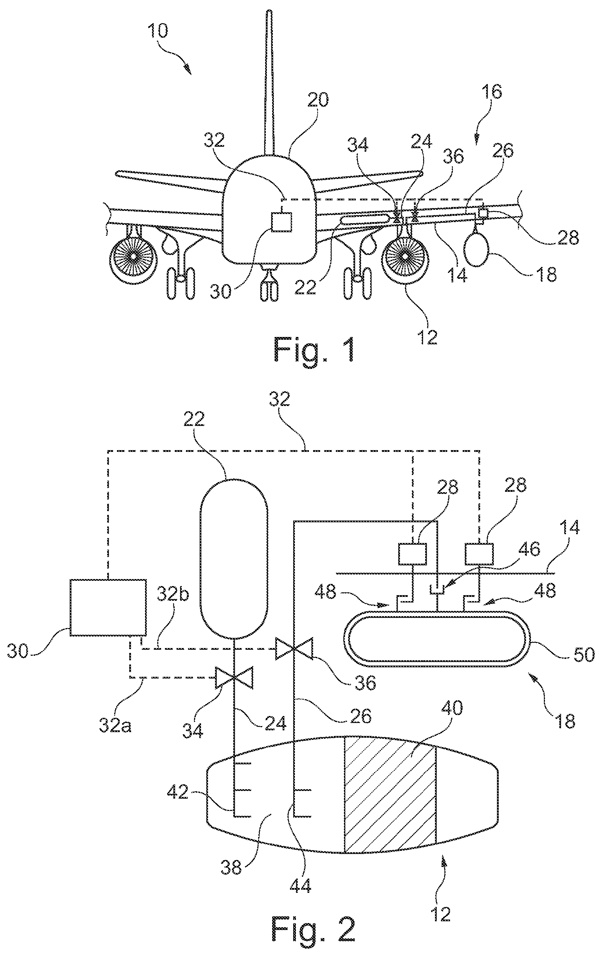

Fig. 1 shows a cross-sectional view of an aircraft 10, which may be an passenger airplane 10. The aircraft 10 comprises an engine 12 attached to the bottom side 14 of a wing 16 of the airplane 10. An external hydrogen tank 18 is attached to the bottom side 14 of the wing 16 near the engine 12. The hydrogen tank 18 is connected to the airplane 10 outside of to the engine 12 with respect to central body 20 of the aircraft 10. I.e. the hydrogen tank 18 is more outside attached to the wing 16 as the engine 12.

Within the wing 16 there is an internal fuel tank 22 for supplying hydrocarbon fuel over a hydrocarbon fuel line 24 to the engine 12. The hydrogen tank 18 is connected to a hydrogen fuel line 26 for supplying the engine 12 with hydrogen. The hydrocarbon fuel line 24 and the hydrogen fuel line 26 are situated within the wing 16.

Further, the aircraft 10 comprises an actuator 28 for disconnecting the hydrogen tank 18 from the wing 16 of the aircraft 10. Actuator 28 also may be used for connecting the hydrogen tank 18 to the wing 16 of the aircraft 10.

The aircraft 10 further comprises a controller 30, that may be situated in the cockpit of the aircraft 10, which is connected over control lines 32 to the actuator 28, to a valve 34 in the hydrocarbon fuel line 24 and to a valve 36 in the hydrogen fuel line 26.

Fig. 2 shows hydrocarbon fuel and hydrogen supply facilities of the aircraft 10 of Fig. 1. The engine 12 of the aircraft 10 comprises a combustion chamber 38 with hydrocarbon fuel injectors 40 and hydrogen injectors 42. Inside the combustion chamber 38 either the hydrocarbon fuel or the hydrogen or a mixture thereof may be combusted. The hot gas generated by the combustion is supplied to a turbine 40 which generates the thrust of the engine 12.

The hydrocarbon fuel injectors 42 are connected with the hydrocarbon fuel line 24. The controller 30 is adapted to control the opening of the valve 34 over the control line 32a to control the amount of hydrocarbon fuel injected into the combustion chamber 38. Additionally, the controller 30 is adapted to control the opening of the valve 36 in the hydrogen fuel line 26 which is connected to the hydrogen injectors 44, for controlling the amount of hydrogen injected into the combustion chamber 38. By controlling the opening states of the valves 34, 36, the controller 30 can set the mixing relationship of hydrocarbon fuel and hydrogen and the overall amount of this mixed fuel for the engine 12.

The external hydrogen tank 18 is connected to the bottom side 14 of the wing 16 via connection mechanism, that comprises a connection element 46 for connecting the interior of the tank 18 with the hydrogen line 26 and a lock mechanism 48 for mechanically coupling the hydrogen tank 18 to the aircraft 10. The controller 30 is adapted to control the actuator 28 over the control line 32c to open and close the lock mechanism 48 for coupling or decoupling the hydrogen tank 18 from or to the aircraft 10. It may also be possible, that the locking mechanism 48 is a mechanism that engages, when the hydrogen tank 18 is moved to its position under the aircraft wing 16 and that may be released by activating the actuator 28. The connection element 46 comprises a plug and socket connection that may be simply interconnected by positioning the hydrogen tank 18 below the wing 16. The connection element 46 may be automatically released, when the hydrogen tank 18 is disconnected from the aircraft and drops to the ground.

The hydrogen tank 18 is designed in a streamlined form as indicated in Fig. 2, for example by round ends, and may further have a hull 50 that is adapted to withstand the impact forces, when the tank 18 is dropped to the ground.

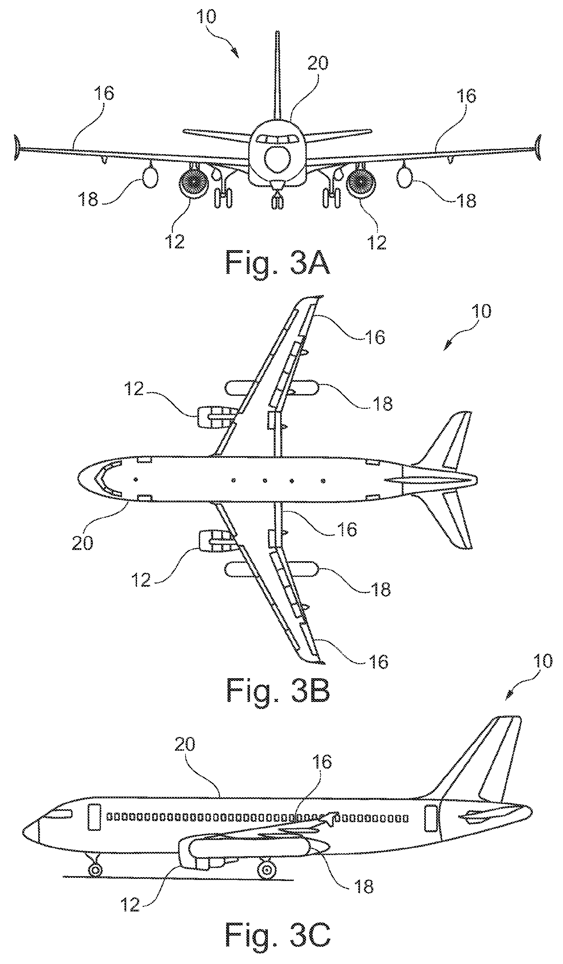

Figs. 3a, 3b and 3c shows an aircraft 10 from the front, from the above and from the side. The aircraft 10 has two engines 12 and two hydrogen tanks 18 that are fixed to the aircraft closely to the engines 12.

In the embodiments shown in Figs. 1, 3a, 3b and 3c, the hydrogen tanks 18 are fixed or attached to the underside of the wings 16 of the aircraft 10 in a position more distant from the central body 20 than the engines 12.

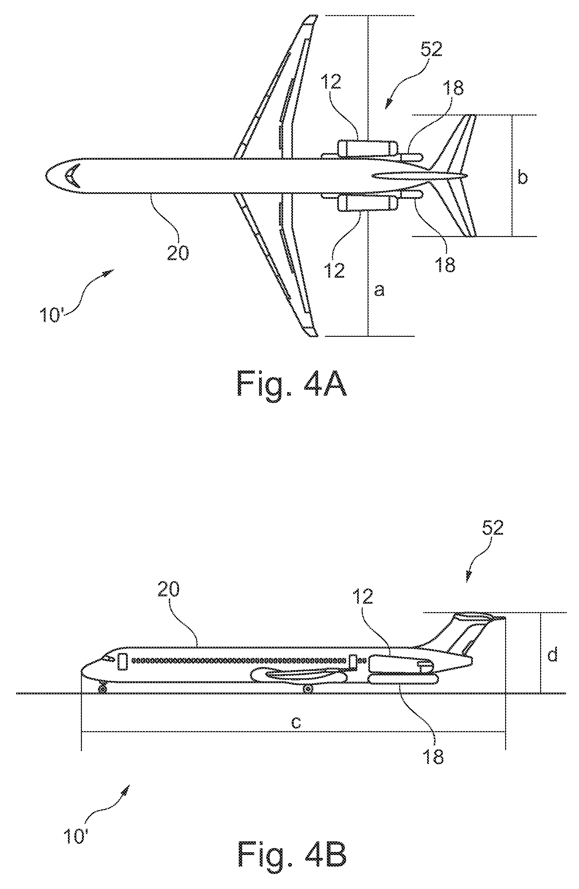

Figs. 4a and 4b show an embodiment of an aircraft 10' with engines 12 attached to the aft fuselage 52 or the tail 52 of the aircraft 10'. Hydrogen tanks 18 are attached to the aft fuselage 52 or tail 52 below the engines 12 but in the vicinity of the engines 12, i. e. close to the engines 12. In other words, the engines 12 and the hydrogen tanks 18 are connected to the rearward end of the central body 20 of the aircraft 10'. To get an impression of the dimensions of the aircraft 10' in the form of a passenger airplane 10', the airplane 10' has a wing span a of 32,9 m, a rudder span b of 12,2 m, an overall length c of 45,1 m and a height d of 9,0 m.

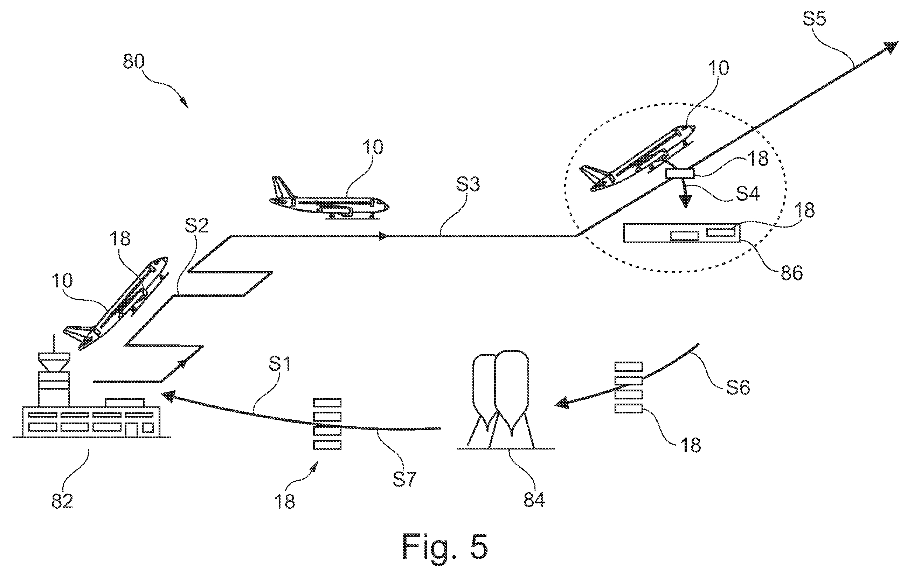

Fig. 5 shows a schematic view of a hydrogen supply system 80 that may be used in connection with an airport 82. The hydrogen supply system 80 comprises a plurality of hydrogen tanks 18, at least one aircraft 10 and a refilling station 84.

In a step S1 hydrogen tanks 18 filled with hydrogen are fixed or attached to an aircraft 10, for example during refuelling of the aircraft 10 with conventional hydrocarbon fuel.

In a step S2, the hydrogen is injected into the engines of the aircraft 10 during taxiing of the aircraft over the area of the airport 82.

In a step S3, further hydrogen is injected into the engines 12 of the aircraft 10 during the initial takeoff phase of the aircraft 10.

In a step S4, after the takeoff of the aircraft 10 the hydrogen tanks 18, which then may be empty, are decoupled and released from the aircraft 10 and drop to the ground into a prepared area 86, for example a sandpit 86, that may be situated at the end of a runway of the airport 82.

In a step S5 the aircraft 10 is driven with conventional propulsion, i.e. by the engines 12 supplied only with hydrocarbon fuel.

In a step S6, the empty or nearly empty hydrogen tanks are collected from the sandpit 86 and are transported to the hydrogen refilling station 84. Alternatively, if the hydrogen tanks 18 are not re-usable tanks, they also may be discarded.

In a step S7, the hydrogen tanks 18 are refilled, transported to a further airplane 20 and attached to the further airplane 10.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### Reference symbols

10, 10' aircraft
12 engine
14 bottom side of wing
16 wing
18 hydrogen tank
20 central body
22 hydrocarbon fuel tank
24 hydrocarbon fuel line
26 hydrogen fuel line
28 actuator
30 controller
32 control lines
32a, 32b, 32c control line
34 valve
36 valve
38 combustion chamber
40 turbine
42 hydrocarbon fuel injectors
44 hydrogen injectors
46 connection element for hydrogen line
48 mechanical connection element
50 hull
52 aft fuselage, tail
80 hydrogen supply system
82 airport
84 refilling station
86 dropping area

## Claims

1. An aircraft (10), comprising:
a hydrogen tank (18),
a tank connection element (46, 48) for releasable coupling the hydrogen tank (18) to the aircraft (10),
an engine (12),
wherein the hydrogen tank (18) is an external hydrogen tank,
wherein the engine (12) is adapted to be supplied with hydrogen from the hydrogen tank (18),
**characterized in that** the engine (12) is adapted to be supplied with hydrocarbon fuel in a normal cruise mode and the hydrogen tank (18) is adapted to be dropped from the aircraft (10) when the aircraft (10) is flying, such that no hydrogen may be on board the aircraft during the normal cruise.

2. The aircraft (10) of claim 1, comprising:
an aircraft connection element (46, 48) for attaching the hydrogen tank (18) to the aircraft (10).

3. The aircraft (10) of claim 2,
wherein the aircraft connection element (48) comprises an actuator element (28) for disconnecting the hydrogen tank (18) from the aircraft (10),
wherein the actuator element (28) is controlled by a controller (30) of the aircraft (10).

4. The aircraft (10) of one of the preceding claims,
wherein the aircraft is a passenger aircraft (10).

5. Hydrogen supply system (80), comprising:
a plurality of hydrogen tanks (18),
an aircraft (10) according to one of the preceding claims,
a refilling station (84) for refilling hydrogen tanks (18).

6. The hydrogen supply system (80) of claim 5, comprising:
a dropping area (86) for receiving one of the hydrogen tanks (18) dropped from the aircraft (10).

7. Method for supplying hydrogen to an aircraft (10), comprising the step of:
Attaching a hydrogen tank (18) to an outside of the aircraft (10),
Injecting hydrogen into an engine (12) of the aircraft (10) during taxiing and an initial takeoff phase, Releasing the hydrogen tank (18),
Supplying hydrocarbon fuel to the engine (12) in a normal cruise mode.

8. The method of claim 7, comprising the steps of:
Collecting the hydrogen tank (18) in a dropping area (86),
Refilling the hydrogen tank (18) in a refilling station (84).

9. A use of an external hydrogen tank (18) with an aircraft (10) according to one of the claims 1 to 4.

## Patentansprüche

1. Ein Flugzeug (10) umfassend:
einen Wasserstofftank (18),
ein Tankanschlusselement (46, 48) zur lösbaren Kupplung des Wasserstofftanks (18) an das Flugzeug (10),
ein Triebwerk (12),
wobei der Wasserstofftank (18) ein externer Wasserstofftank ist,
wobei das Triebwerk (12) angepasst ist, um von dem Wasserstofftank (18) mit Wasserstoff versorgt zu werden,
**dadurch gekennzeichnet, dass** das Triebwerk (12) angepasst ist, um in einer normalen Reiseflugbetriebsart mit Kohlenwasserstoff-Treibstoff versorgt zu werden, und der Wasserstofftank (18) angepasst ist, um von dem Flugzeug (10) abgeworfen zu werden, wenn das Flugzeug (10) fliegt, so dass während der normalen Reiseflugbetriebsart kein Wasserstoff an Bord des Flugzeugs sein kann.

2. Flugzeug (10) nach Anspruch 1, umfassend:
ein Flugzeugverbindungselement (46, 48) zum Befestigen des Wasserstofftanks (18) an dem Flugzeug (10).

3. Flugzeug (10) nach Anspruch 2,
wobei das Flugzeugverbindungselement (48) ein Betätigungselement (28) zum Trennen des Wasserstofftanks (18) von dem Flugzeug (10) aufweist,
wobei das Betätigungselement (28) von einer Steuereinrichtung (30) des Flugzeugs (10) gesteuert wird.

4. Flugzeug (10) nach einem der vorhergehenden Ansprüche, wobei das Flugzeug ein Passagierflugzeug (10) ist.

5. Wasserstoffversorgungssystem (80), umfassend:
eine Vielzahl von Wasserstofftanks (18),
ein Flugzeug (10) nach einem der vorhergehenden Ansprüche,
eine Wiederauffüllstation (84) um die Wasserstofftanks (18) wieder aufzufüllen.

6. Wasserstoffversorgungssystem (80) nach Anspruch 5, umfassend:
einen Abwurfbereich (86) zur Aufnahme eines von dem Flugzeug (10) abgeworfenen Wasserstofftanks (18).

7. Verfahren zum Versorgen eines Flugzeugs (10) mit Wasserstoff, umfassend die Schritte:
Anbringen des Wasserstofftanks (18) an der Außenseite des Flugzeugs (10),
Zufuhr von Wasserstoff in ein Triebwerk (12) des Flugzeugs (10) während des Rollens und einer anfänglichen Startphase,
Lösen des Wasserstofftanks (18),
Versorgen des Triebwerks (12) mit KohlenwasserstoffTreibstoff in einer normalen Reiseflugbetriebsart.

8. Verfahren nach Anspruch 7, umfassend die Schritte:
Aufsammeln des Wasserstofftanks (18) in einem Abwurfbereich (86), Wiederauffüllen des Wasserstofftanks (18) in einer Wiederauffüllstation.

9. Verwendung eines externen Wasserstofftanks (18) mit einem Flugzeug (10) nach einem der Ansprüche 1 bis 4.

## Revendications

1. Avion (10) comprenant :
un réservoir d'hydrogène (18),
un élément de connexion de réservoir (46, 48) pour l'accouplement amovible du réservoir d'hydrogène (18) à l'avion (10),
un moteur (12)
le réservoir d'hydrogène (18) étant un réservoir d'hydrogène externe,
le moteur (12) étant adapté pour être alimenté par de l'hydrogène provenant du réservoir d'hydrogène (18),
**caractérisé en ce que** le moteur (12) est adapté pour être alimenté en hydrocarbure dans un mode de croisière normale et le réservoir d'hydrogène (18) étant adapté pour être largué par l'avion (10) lorsque l'avion (10) est en train de voler de telle manière que de l'hydrogène ne peut pas être à bord de l'avion pendant la croisière normale.

2. Avion (10) selon la revendication 1 comprenant un élément de connexion de réservoir (46, 48) pour fixer le réservoir d'hydrogène (18) à l'avion (10).

3. Avion (10) selon la revendication 2, l'élément de connexion de réservoir (48) comprenant un élément actionneur (28) pour déconnecter le réservoir d'hydrogène (18) de l'avion (10), l'élément actionneur (28) étant contrôlé par un contrôleur (30) de l'avion (10).

4. Avion (10) selon l'une des revendications précédentes, l'avion étant un avion de passagers (10).

5. Système d'alimentation en hydrogène (80) comprenant :
une pluralité de réservoirs d'hydrogène (18),
un avion (10) selon l'une des revendications précédentes,
une station de remplissage (84) pour remplir les réservoirs d'hydrogène (18).

6. Système d'alimentation en hydrogène (80) selon la revendication 5 comprenant :
une zone de largage (86) pour recevoir l'un des réservoirs d'hydrogène (18) largués par l'avion (10).

7. Procédé d'alimentation en hydrogène d'un avion (10) comprenant les étapes :
de fixation d'un réservoir d'hydrogène (18) à un côté extérieur de l'avion (10),
d'injection d'hydrogène dans un moteur (12) de l'avion (10) pendant la circulation et une phase de décollage initial,
de libération du réservoir d'hydrogène (18),
de fourniture d'hydrocarbure au moteur (12) dans un mode de croisière normale.

8. Procédé selon la revendication 7 comprenant les étapes de :
recueil du réservoir d'hydrogène (18) dans une zone de largage (86),
remplissage du réservoir d'hydrogène (18) dans une station de remplissage (84).

9. Utilisation d'un réservoir d'hydrogène externe (18) avec un avion (10) selon l'une des revendications 1 à 4.
